# FASCICULE DE BREVET EUROPEEN

(11) **EP 0 670 428 B1**
(45) Date de publication et mention de la délivrance du brevet: **15.12.1999**
(21) Numéro de dépôt: 95810130.5
(22) Date de dépôt: 01.03.1995
(51) Int. Cl.: F16B 7/04

(54) **Appareil de guidage et d'assemblage pour l'exécution de travaux divers**
Vorrichtung zur Führung und Montage zur Ausführung verschiedener Arbeiten
Guiding and mounting device for carrying out various operations

(30) Priorité: 01.03.1994 CH 67094
(43) Date de publication de la demande: 06.09.1995
(73) Titulaire: Seewer, Raymonde, CH-1074 Mollie-Margot (CH); Seewer-Vuichard, Ernest, CH-1623 Semsales (CH)
(72) Inventeur: Seewer, Raymonde, CH-1074 Mollie-Margot (CH); Seewer-Vuichard, Ernest, CH-1623 Semsales (CH)

(56) Documents cités:
- EP-A- 0 183 219
- CH-A- 225 309
- CH-A- 353 887
- DE-A- 2 312 345
- DE-U- 9 101 321
- GB-A- 190 010 536
- US-A- 2 754 156
- STADING M. ET AL: "Rheological behavior", CARBOHYDRATE POLYMERS, LONDON, 01-01-1993, Vol. 22, no. 1, pages 49 à 56
- PATENT ABSTRACTS OF JAPAN vol. 017, no. 08 (P-1489) 18 Février 1993 & JP 04 283 751 A (TORAY IND INC) 08 Octobre 1992
- DATABASE WPI, semaine 9023, Derwent Publications Ltd., London, GB, AN 90-176630, Classe P13, SU 1500211 A
- DATABASE WPI, semaine 9128, Derwent Publications Ltd., London, GB, AN 91-205360, Classe T01, ANONYMOUS "Extracting timing from rank during simulation", 03-05-1993
- CHEMICAL ABSTRACTS, Vol. 97, no. 7, 16-08-1982 (Columbus, Ohio, US), page 441, colonne 1, abstrait no. 53442F, BASU ET AL:, "Vitamin A"
- BIOLOGICAL ABSTRACTS, Vol. 7, no. 23, 05-07-1973 (Philadelphia, PA, US), page 32, abstrait no. 345678G, MARTYNENKO: "Ophtalmic compositions"
- STURLEY K.R.: "Radio Receiver Design" , 02-08-1965, CHAPMAN AND HALL, LONDON, GB
- DATABASE INSPEC, INSTITUTE OF ELECTRICAL ENGINEERS, STEVENAGE, GB, INSPEC no. 4400163, REID T J ET AL: "Strained layer quantum well laser", 01-06-1976

## Description

L'invention a pour objet un appareil d'assemblage, notamment pour réaliser des dispositifs de guidage.

On connaît des dispositifs d'assemblage d'éléments tubulaires, par exemple par le brevet CH 353887, qui décrit un dispositif d'assemblage pour des éléments tubulaires. Dans ce brevet le dispositif est constitué de deux parties séparées maintenues ensemble par un boulon. Ce dispositif n'est conçu que pour assembler des tubes, il n'a pas été prévu pour assembler d'autres objets comme par exemple des panneaux. De plus, du fait que le maintien des tubes ensemble est lié au serrage les réglages sont délicats car il faut régler la longueur et l'orientation en même temps.

Le but de l'invention est de fournir un appareil qui ne présente pas les inconvénients des dispositifs connus notamment de séparer les opérations de réglage de la longueur et de l'orientation.

L'appareil d'assemblage, notamment pour réaliser des dispositifs de guidage, selon l'invention défini à la revendication 1 permet d'atteindre ces buts.

En effet, l'appareil selon l'invention comprend deux éléments de base, qui sont utilisés indépendamment l'un de l'autre ou en combinaison, pouvant maintenir les éléments à assembler, chaque élément de base sera fixé sur les éléments à assembler sans tenir compte de leur orientation.

L'invention sera mieux comprise et ses différents avantages apparaîtront plus clairement à la lecture de la description de formes d'exécution donnée uniquement à titre d'exemple en regard des dessins sur lesquels :
les figures 1 à 5 représentent en vue latérale de face et d'arrière, en vue de dessus et de dessous et en vue de côté une réalisation du premier élément de base.
les figures 6 à 11 représentent différentes utilisations de ce premier élément.
la figure 12 représente une réalisation du second élément de base en vue de derrière faisant apparaître les différences avec le premier élément.
la figure 13 représente une utilisation du second élément de base représenté à la figure 12.
la figure 14 représente en vue de face une réalisation d'une pièce intermédiaire.
La figure 15 représente en vue en plan une utilisation de la pièce intermédiaire représentée à la figure 14.
la figure 16 représente un assemblage constitué de deux second éléments de base assemblés avec une pièce intermédiaire.
les figures 17 et 18 représentent un élément supplémentaire en vue latérale en vue en plan.
les figures 19 à 21 représentent différentes utilisations de l'élément supplémentaire assemblé à des éléments de base.
les figures 22 et 23 représentent un élément complémentaire en vue latérale et en vue en plan.
la figure 24 représente un assemblage avec l'élément complémentaire de la figure 22 assemblé avec des éléments de base.
les figures 25 à 27 représentent une pièce supplémentaire pouvant être utilisée avec les éléments de base.

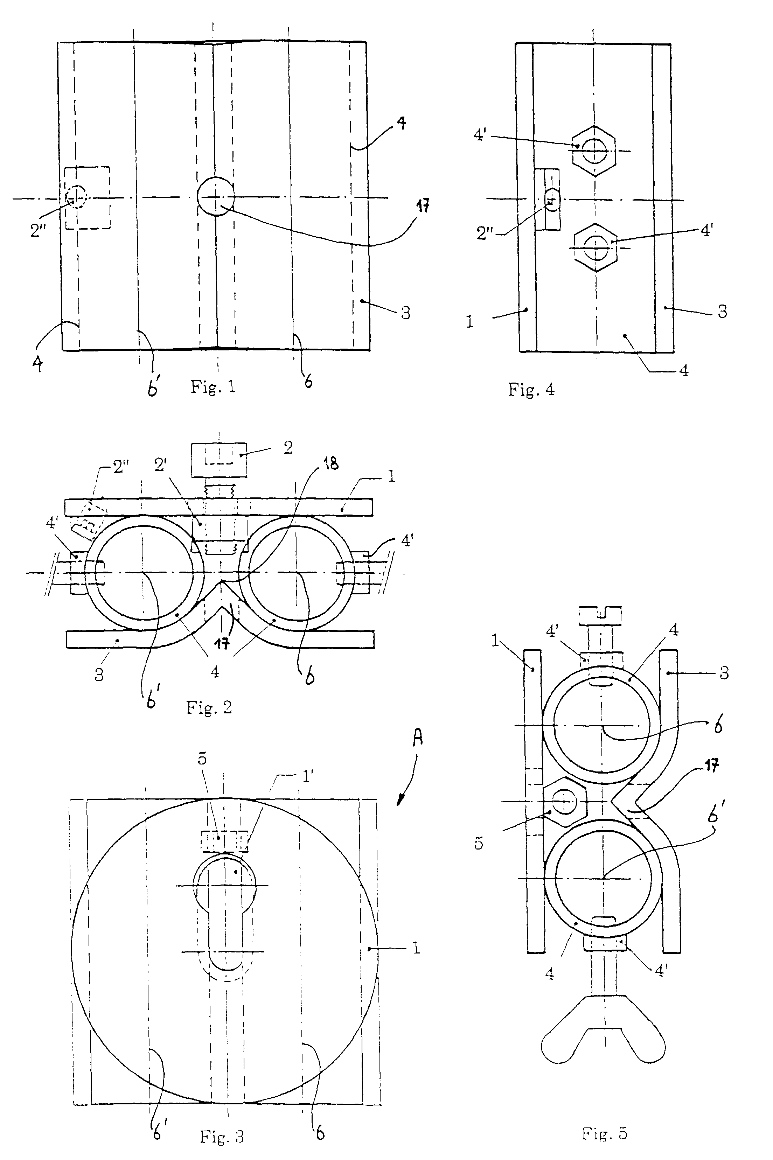

Comme on le voit sur les figures 1 à 5 le premier élément de base A comprend deux bouts de tube 4 disposés parallèlement selon les axes 6 et 6'. Les deux bouts de tube 4 sont pris en sandwich entre les deux plaques 1 et 3 et sont fixés sur ces dernières . La plaque 1 est ronde et comporte approximativement en son centre une ouverture 1' en forme de trou de serrure. Les deux bouts de tube 4 sont espacés pour laisser la place à un écrou 2' dans lequel vient se visser une vis 2 permettant d'assembler ledit élément soit à un même élément de base ou à d'autres pièces notamment à un second élément de base. La plaque 3 est carrée en plan (figure 1) et a une section transversale en V (voir figure 2 et 5), dont la partie inférieure du V 18 est dirigée du côté de la plaque ronde. La forme d'exécution du premier élément de base comporte encore un écrou 5 fixé sur la plaque ceci pour permettre le passage d'une vis poussant et maintenant le boulon 2 au fond du trou de serrure 1'. Les bouts de tube 4 comportent fixés sur leurs côtés des écrous permettant au moyen de vis de fixer les éléments les traversant. Les vis et écrouis 4' peuvent servir aussi à fixer des panneaux à l'élément de base. Les vis traversant les écrous 4' pourront être de toutes sortes de vis connues par exemple avec une tête fendue, à ailettes (voir figure 5).

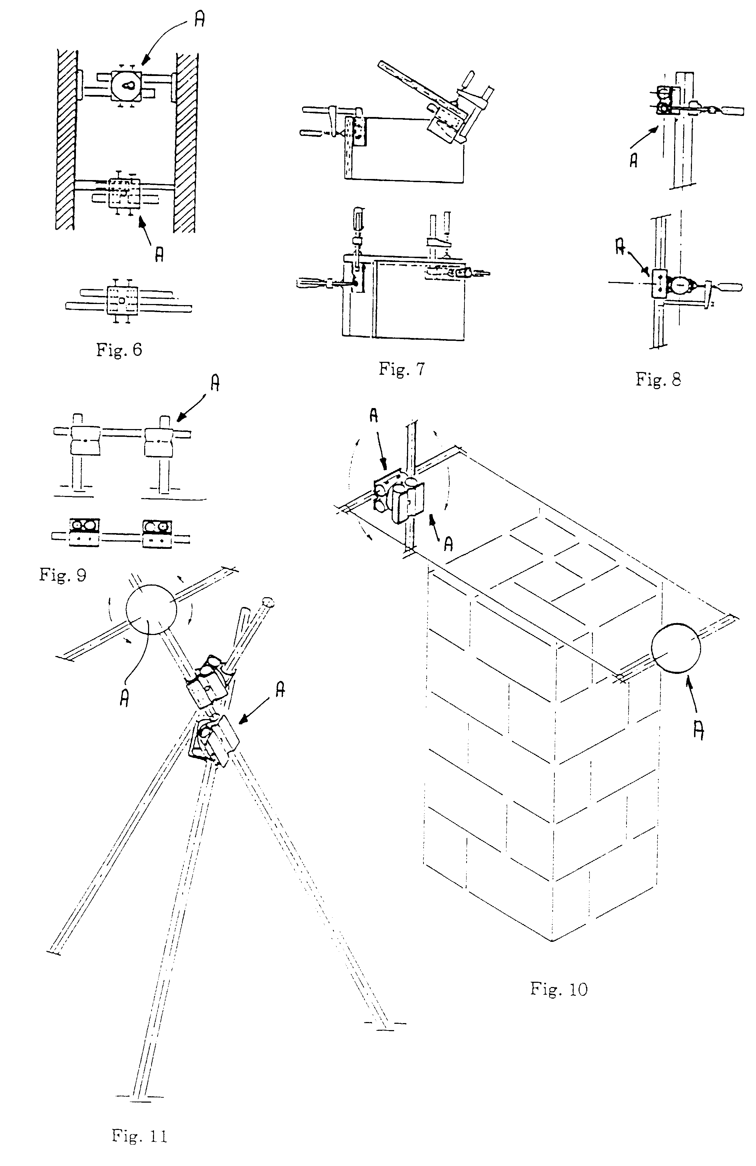

Sur les figures 6 à 10 on a représenté différentes utilisations du premier élément de base A. La figure 6 montre comment il est possible d'installer une traverse entre deux parois. La figure 7 montre comment ledit élément de base A peut être utilisé pour maintenir des panneaux avec l'aide de serre-joint afin de fixer lesdits panneaux ensembles. La figure 8 représente ledit premier élément A fixé sur un tube avec l'aide d'un serre-joint. La figure 9 montre la réalisation d'une barrière à l'aide d'éléments A. La figure 11 montre la réalisation de gabarit avec l'aide d'éléments A. La figure 10 montre la réalisation de guide pour la construction de murs faits avec des éléments A et des fils.

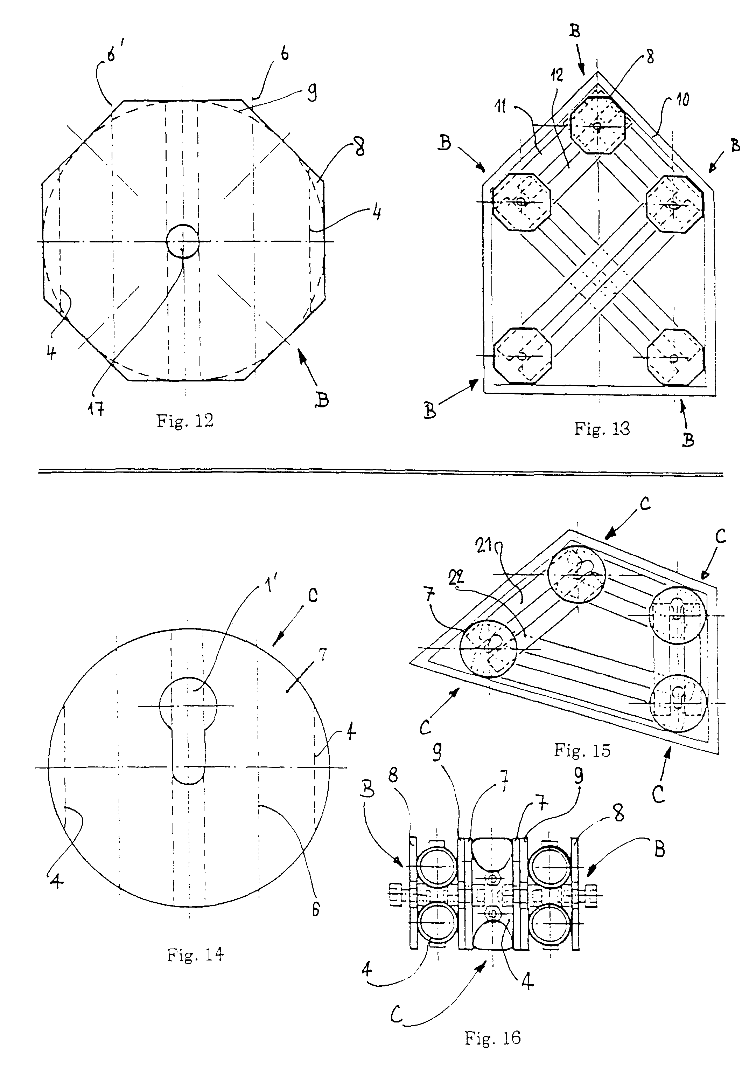

La figure 12 représente une réalisation du second élément de base B. Comme on le voit sur la figure 12 l'élément B comprend deux plaques 8 et 9 entre lesquelles sont disposés deux bouts de tube 4 d'axe 6 et 6'. La plaque 9 est identique à la plaque 1 du premier élément de base bien que l'ouverture en forme de trou de serrure n'aie pas été représentée pour simplifier le dessin. La plaque 8 est de forme octogonale circonscrite à la plaque 9 et comporte une ouverture circulaire 17 en son centre. L'ouverture 17 est destinée à rendre la vis 2, introduite dans le trou de serrure 1', accessible avec une clé, ceci pour permettre d'assembler ledit second élément de base B avec par exemple un premier élément de base A et de serrer la vis introduite dans le trou de serrure 1'.

Sur la figure 13 on a représenté l'utilisation de cinq second éléments de base pour la réalisation d'un gabarit permettant d'assembler des panneaux 10. Les différents éléments de base B ont été assemblés aux moyens de barres 11 et 12.

La figure 14 montre une pièce intermédiaire C. La pièce C est constituée de deux plaques 7 identiques à la plaque 1 du premier élément de base A. Entre les deux plaques 7 sont pris en sandwich deux bouts de tube 4 avec les axes 6 et 6'. Cette pièce intermédiaire C peut être utilisée toute seule par exemple pour réaliser des gabarits dont les angles ne sont pas des chiffres ronds. Dans le cas de la figure 15 on a représenté la réalisation d'un gabarit pour un quadrilatère quelconque au moyen de quatre pièce intermédiaire C.

La figure 16 représente un assemblage de deux éléments B avec une pièce intermédiaire C.

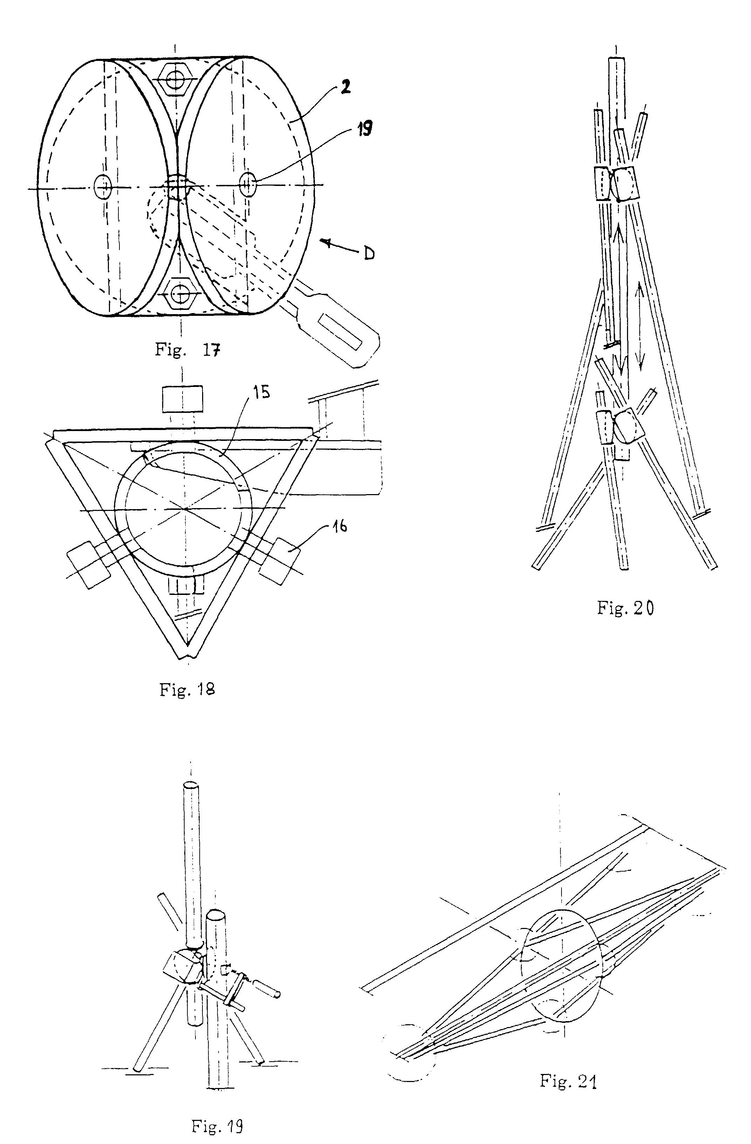

Les figures 17 et 18 représentent la réalisation d'un élément supplémentaire D comprenant 3 plaques 2 identiques en grandeur à la plaque 1 du premier élément de base A. Ces trois plaques sont fixées sur un bout de tube 15 et chaque plaque comporte en son centre un trou fileté 19. Les trous filetés recevront des vis 16 sur lesquelles viendront s'accrocher des éléments de base au moyen de l'ouverture en trou de serrure.

Sur les figures 19 à 21 on a représenté différents d'assemblages d'élément allongé par exemple de tube au moyen de pièces D et d'éléments de base A et B.

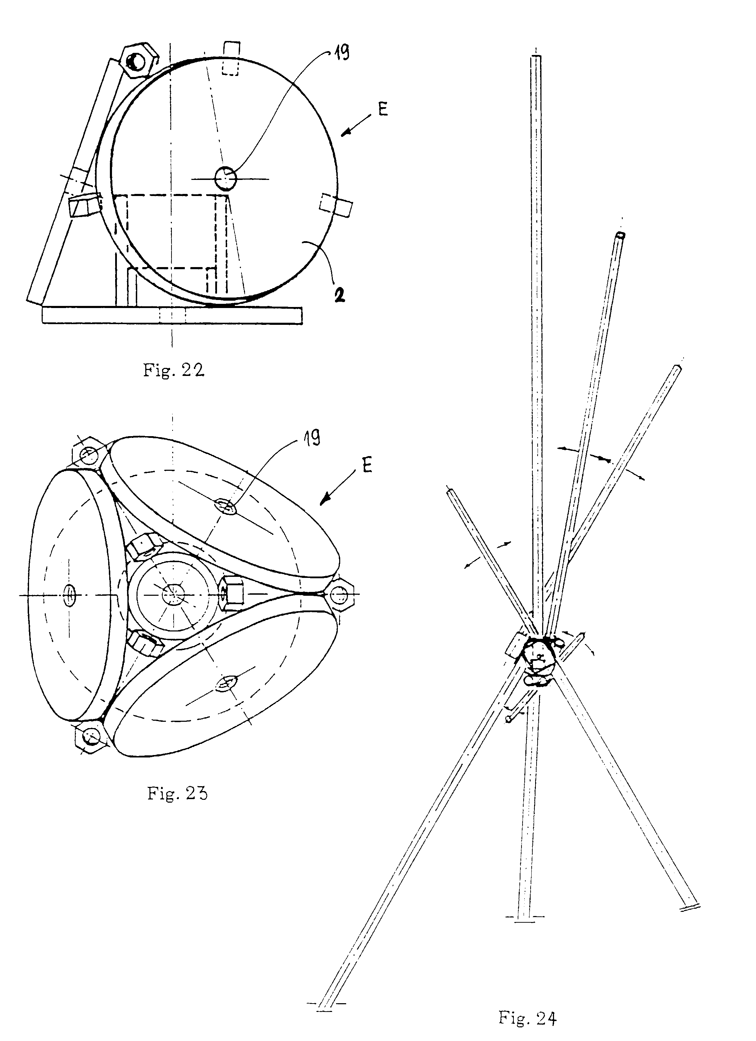

Les figures 22 et 23 représentent un élément complémentaire E constitué de quatre plaques 2 identiques en grandeur à la plaque 1 de l'élément A. Ces quatre plaques comportent des trous filetés 19 en leurs centres pour permettre le passage d'une vis destinée à fixer des éléments de base A ou B ou des éléments supplémentaires C ou des pièces D. La figure 24 représente un assemblage réalisé avec l'élément complémentaire E et différents éléments ou pièces A, B, C et D.

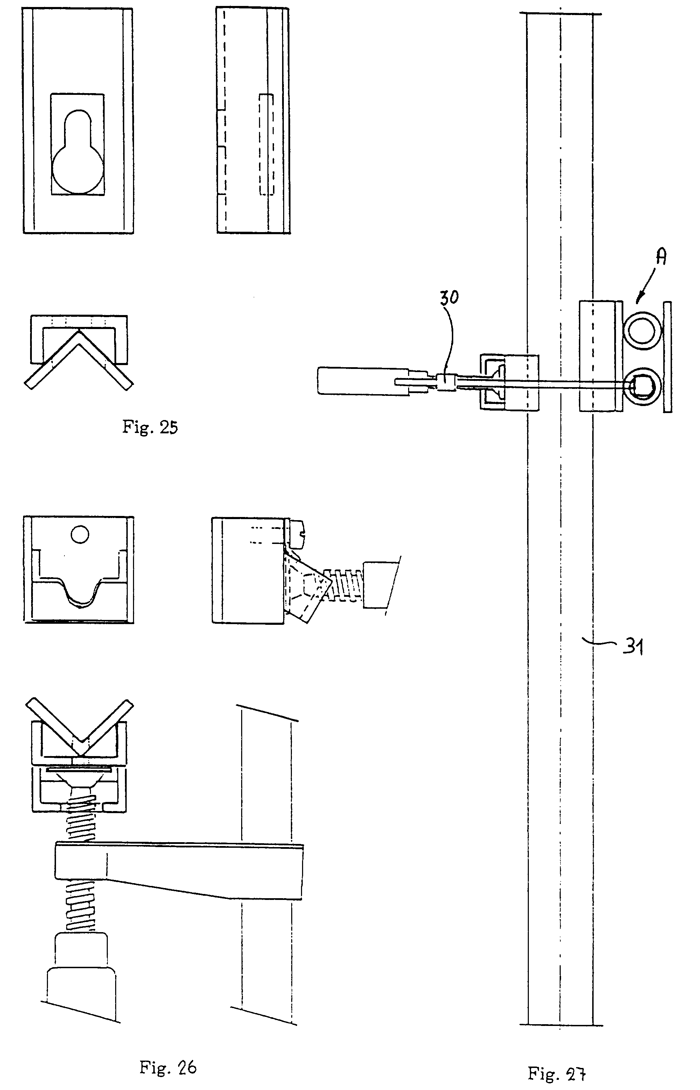

Les figures 25, 26 et 27 représentent schématiquement une pièce supplémentaire permettant de fixer l'élément A à l'aide d'un serre-joint 30 sur une conduite circulaire 31 par exemple.

## Revendications

1. Appareil d'assemblage, notamment pour réaliser des dispositifs de guidage, comportant deux éléments de base, un premier élément (A, fig 1 à 5) constitué de deux plaques (1, 3) auxquelles sont fixés des tubes, la première plaque étant ronde (1) et présentant approximativement en son centre une ouverture, l'appareil d'assemblage étant caractérisé en ce que les deux éléments sont utilisés indépendamment l'un de l'autre (fig. 6 à 11) ou en combinaison (fig. 16), le premier élément étant constituté de deux bouts de tube (4) disposés parallèles laissant un espace entre eux, pris en sandwich entre lesdites plaques, l'ouverture de ladite première plaque étant en forme de trou de serrure (1') s'ouvrant entre les deux dits bouts de tube, la deuxième plaque (3) étant un bout de profilé de forme en vue carrée et de dimension telle que le carré est circonscrit à la plaque ronde et dont la section transversale est en forme de V dont la partie inférieure est dirigée vers l'intérieur du sandwich, c'est-à-dire vers la plaque ronde; un second élément (B, fig 12) constitué de deux bouts de tube (4) de même diamètre que ceux du premier élément disposés parallèles laissant un espace entre eux pris en sandwich entre deux plaques (8, 9, fig 12) auxquelles ils sont fixés, la première plaque (9) étant identique à celle du premier élément et la seconde (8) ayant la forme d'un octogone circonscrit à la forme ronde de la première et présentant une ouverture circulaire (17) en son centre, les bouts de tube des deux éléments comprenant des moyens pour maintenir les pièces destinées à être introduites à l'intérieur.

2. Appareil selon la revendication 1, caractérisé en ce qu'il comporte une pièce intermédiaire (C) constituée de deux bouts de tube de même diamètre que ceux du premier élément de base disposés parallèles laissant un espace entre eux, pris en sandwich entre deux plaques (7, fig 14) auxquelles ils sont fixés, la première et la seconde plaque étant identiques entre elles et identiques à la première plaque du premier élément.

3. Appareil selon l'une des revendications 1 et 2, caractérisé en ce qu'il comporte en outre un élément supplémentaire (D) constitué de trois plaques rondes (2 , fig 17) de mêmes dimensions que la première plaque (1) du premier élément (A) comportant chacune en son centre un trou fileté (19) fixées sur un bout de tube constituant en coupe transversale un triangle équilatéral.

4. Appareil selon l'une des revendications 1 à 3, caractérisé en ce qu'il comporte en outre un élément complémentaire (E) constitué de quatre plaques rondes (2 fig 22, 23) de mêmes dimensions que la première plaque (1) du premier élément (A) comportant chacune en son centre un trou fileté (19, fig 22, 23) fixées ensembles selon les faces d'un tétraèdre régulier.

## Patentansprüche

1. Führungs- und Montagegerät für die Ausführung diverser Arbeiten, bestehend aus zwei Basiselementen, einem ersten Element (A, Figuren 1 bis 5), das von zwei Platten (1, 3) gebildet wird, an denen Rohre befestigt sind, wobei die erste Platte rund ist (1) und annähernd in ihrer Mitte eine Öffnung aufweist, wobei das Führungs- und Montagegerät dadurch gekennzeichnet ist, daß die beiden Elemente unabhängig voneinander (Figuren 6 bis 11) oder in Kombination (Figur 16) verwendet werden, wobei das erste Element von zwei Rohrenden (4) gebildet wird, die parallel angeordnet sind und zwischen sich einen Abstand halten und zwischen den Platten übereinandergeschichtet angeordnet sind, wobei die Öffnung der ersten Platte die Form eines Schlüsselloches (1') aufweist, das sich zwischen den beiden Rohrenden öffnet, die zweite Platte (3) ein Profilende quadratischer Form und derartiger Abmessungen ist, daß das Quadrat mit der runden Platte umschrieben ist, und dessen Querschnitt die Form eines V aufweist, dessen unterer Teil zum Inneren der Übereinanderschichtung gerichtet ist, d.h. zu der runden Platte; einem zweiten Element (B, Figur 12), das von zwei Rohrenden (4) mit demselben Durchmesser wie jene des ersten Elements gebildet wird, die parallel angeordnet sind und einen Abstand zwischen sich halten und zwischen zwei Platten (8, 9 Figur 12), an denen sie befestigt sind, übereinandergeschichtet angeordnet sind, wobei die erste Platte (9) identisch mit jener des ersten Elements ist und die zweite (8) die Form eines Achtecks aufweist, das mit der runden Form des ersten umschrieben ist und eine kreisförmige Öffnung (17) in seiner Mitte aufweist, wobei die Rohrenden der beiden Elemente Mittel umfassen, um die Teile, die dazu bestimmt sind, nach innen eingeführt zu werden, zu halten.

2. Gerät nach Anspruch 1, dadurch gekennzeichnet, daß es einen Zwischenteil (C) umfaßt, der von zwei Rohrenden mit demselben Durchmesser wie jene des ersten Basiselements gebildet wird, die parallel angeordnet sind und einen Abstand zwischen sich halten und zwischen zwei Platten (7, Figur 14), an denen sie befestigt sind, übereinandergeschichtet angeordnet sind, wobei die erste und die zweite Platte untereinander identisch und mit der ersten Platte des ersten Elements identisch sind.

3. Gerät nach einem der Ansprüche 1 und 2, dadurch gekennzeichnet, daß es ferner ein Zusatzelement (D) umfaßt, das von drei runden Platten (2, Figur 17) mit denselben Abmessungen wie die erste Platte (1) des ersten Elements (A) gebildet wird, die jeweils in ihrer Mitte ein Gewindeloch (19) umfassen und auf einem Rohrende befestigt sind, das im Querschnitt ein gleichschenkeliges Dreieck bildet.

4. Gerät nach einem der Ansprüche 1 bis 3, dadurch gekennzeichnet, daß es ferner ein Ergänzungselement (E) umfaßt, das von vier runden Platten (2, Figur 22, 23) mit denselben Abmessungen wie die erste Platte (1) des ersten Elements (A) gebildet wird, die jeweils in ihrer Mitte ein Gewindeloch (19, Figur 22, 23) aufweisen und gemeinsam entlang der Seiten eines gleichmäßigen Tetraeders befestigt sind.

## Claims

1. Guiding and assembly device used to carry out various works, comprising two base elements, a first element (A, figures 1 to 5) formed from two plates (1, 3), to which are fixed pipes, the first plate (1) being round and having an opening at its approximate centre, the guiding and assembly device being characterized in that the two elements are used independently of each other (figures 6 to 11), or in combination (figure 16), the first element being formed from two sections of pipe (4) disposed in parallel, spaced apart, sandwiched between said plates, the opening of said first plate being in the form of a keyhole (1') opening out between said two sections of pipe, the second plate (3) being square in plan view and the dimension of this being such that the square circumscribes the round plate, the cross-section being in the form of a V, the lower part of which points towards the interior of the sandwich, i.e. towards the round plate; a second element (B, fig 12), formed from two sections of pipe (4) of the same diameter as those of the first element disposed in parallel and spaced apart, sandwiched between two plates (8, 9 figure 12) to which they are fixed, the first plate (9) being identical to that of the first element and the second (8) being in the form of an octagon circumscribing the round form of the first plate and having a circular opening (17) at its centre, the sections of pipe of the two elements being equipped with means for supporting the parts designed to be introduced into the opening.

2. Device as claimed in claim 1, characterized in that it comprises an intermediate part (C) formed from two sections of pipe of the same diameter as those of the first base element disposed in parallel and spaced apart, sandwiched between two plates (7, figure 14) to which they are fixed, the first and second plate being identical to each other and to the first plate of the first element.

3. Device as claimed in either of the claims 1 or 2, characterized in that that it also comprises an additional element (D) formed from three round plates (2, figure 17), of the same dimensions as the first plate (1) of the first element (A) each having at its centre a threaded hole (19), said plates being fixed to a section of pipe, forming an equilateral triangle in cross-section.

4. Device as claimed in any of the claims 1 to 3, characterized in that it also comprises an additional element (E) formed from four round plates (2, figures 22, 23), of the same dimensions as the first plate (1) of the first element (A) each of which has at its centre a threaded hole (19, figures 22, 23), which are fixed together to form the sides of a regular tetrahedron.
